**Europäisches Patentamt**

**European Patent Office**

**Office européen des brevets**

(19)

(11) Veröffentlichungsnummer: **0 197 890**
**B1**

(12) **EUROPÄISCHE PATENTSCHRIFT**

(45) Veröffentlichungstag der Patentschrift:
02.11.88

(51) Int. Cl.⁴: **B 23 P 11/02,** B 23 P 15/10,
F 16 B 4/00

(21) Anmeldenummer: 86810147.8

(22) Anmeldetag: 27.03.86

(54) Verfahren zum formschlüssigen Einschrumpfen eines zylindrischen Keramikteils in einen Flansch aus einem Eisenwerkstoff und Keramik-Metall-Verbundkörper.

(30) Priorität: 10.04.85 CH 1524/85

(43) Veröffentlichungstag der Anmeldung:
15.10.86 Patentblatt 86/42

(45) Bekanntmachung des Hinweises auf die Patenterteilung:
02.11.88 Patentblatt 88/44

(84) Benannte Vertragsstaaten:
AT BE CH DE FR GB IT LI NL SE

(56) Entgegenhaltungen:
FR-A-981 955
GB-A-1 394 919
US-A-4 017 959

DERWENT JAPANESE PATENTS REPORT,
METALLURGY, Band 5, Nr. 28, 15. August 1966,
Derwent Publications; & JP - A - 66 12 338 (TOKYO
SHIBAURA ELECTRIC CO., LTD.) 11-07-1966

(73) Patentinhaber: METOXIT AG, CH- 8240 Thayngen
(CH)

(72) Erfinder: Rieger, Wolfhart, zur Mühle, CH- 8263
Buch (CH)
Erfinder: Widrig, Jakob, Ginsterweg 20, CH- 8400
Winterthur (CH)

(74) Vertreter: Hiebsch, Gerhard F., Dipl.- Ing.,
Erzbergerstrasse 5A Postfach 464, D-7700 Singen
1 (DE)

## Beschreibung

Die Erfindung betrifft nach dem Oberbegriff von Anspruch 1 ein Verfahren zum kraftschlüssigen Einschrumpfen eines zylindrischen Keramikteils in einen Flansch aus einem Eisenwerkstoff, insbesondere eines Keramikkolbens in eine mit einem Antrieb verbundene Halterung aus Stahl bei Fördereinrichtungen für flüssige und gasförmige Medien, durch teilweises Einführen des Keramikteils in eine Bohrung des erwärmten Flansches und Abkühlen desselben auf Raumtemperatur.

Die Erfindung bezieht sich ferner auf einer Keramik-Metall-Verbundkörper nach dem Oberbegriff von Anspruch 2.

Keramik-Metall-Verbundkörper finden zunehmend Anwendung im Maschinenbau, insbesondere bei Explosionsmotoren oder hochtourig laufenden Pumpenaggregaten. Dabei macht man sich die vorteilhaften Eigenschaften des Keramikwerkstoffs zu nutze, nämlich die hohe Temperatur- und Temperaturwechselbeständigkeit und/oder die Verschleissfestigkeit insbesondere in der Hochdruckpumpentechnik finden Keramikkolben verschiedenen Durchmessers Einsatz zur Verdichtung von Flüssigkeiten für Reinigungsoperationen. Bei einem solchen Keramikkolben muss der Fuss mit einem zum Antrieb im Wirkverbindung stehenden Flansch, welcher meist aus einem Eisenwerkstoff besteht, verbunden werden. Die Verbindung wird durch Schrauben, Kleben oder Einschrumpfen bewerkstelligt. Aufgrund der hohen Frequenz der Hin- und Herbewegung des arbeitenden Kolbens wird auf diesen in axialer Richtung eine starke Zugbeanspruchung ausgeübt, die bereits bei kleinen Kolbendurchmessern von beispielsweise 20 mm Durchmesser bis zu 8000 N betragen kann. Aus Dimensionsgründen sind bei der Schraubenverbindung meist nur Schrauben verwendbar, die die bei hoher Frequenz des Kolbens auftretende Zugbeanspruchung nicht aufzunehmen vermögen. Bei kraftschlüssigem Kontakt von Keramikkolben und Flansch liegt bei einer Klebeverbindung die Kraft, die auf die Verbindung Stahl - Keramik übertragen werden kann, unterhalb der Zugbeanspruchung, die bei einer Arbeitsweise im hohen Frequenzbereich auftritt. Auch mit einem kraftschlüssigen herkömmlichen Einschrumpfverfahren können die genannten auftretenden Beanspruchungen nicht kompensiert werden. Die Leistungsfähigkeit von Maschinen mit Keramikkolben ist somit im wesentlichen begrenzt durch die Qualität der Verbindung Metall - Keramik.

Im Falle einer Schwächung der Verbindung - etwa durch Brechen einer Verbindungsschraube - reisst der Keramikkolben sofort aus und beschädigt den Zylinder derart, dass das Pumpenaggregat unbrauchbar wird.

Angesichts dieser Gegebenheiten haben sich die Erfinder das Ziel gesetzt, ein Verfahren zum kraftschlüssigen Einschrumpfen eines zylindrischen Keramikteils in einen Flansch aus einem Eisenwerkstoff, insbesondere eines Keramikkolbens in eine mit dem Antrieb verbundene Halterung aus Stahl bei Fördereinrichtungen für flüssige und gasförmige Medien, durch teilweises Einführen des Keramikteils in eine Bohrung eines erwärmten Flansches und Abkühlen desselben auf Raumtemperatur zu schaffen, welches eine Metall-Keramik-Verbindung gewährleistet, die die vorerwähnten Nachteile nicht aufweist; insbesondere sollen bei mittleren Kolbendurchmessern von 20 - 30 mm Verbindungen hergestellt werden, die auf den Kolben in axialer Richtung wirkenden Kräften von bis zu 4'000 N/cm$^2$ Kontaktfläche Keramik-Metall widerstehen können.

Die Aufgabe wird erfindungsgemäss dadurch gelöst, dass der Durchmesser D der Bohrung des Flansches gegenüber dem Durchmeser d des formschlüssig mit dem Flansch in Kontakt tretenden Teilstücks des Keramikteils ein Untermass von 13 - 27 μm aufweist, die mit dem Flansch formschlüssig in Kontakt tretende zylindrische Oberfläche des Keramikteils auf eine Rauhigkeit Ra von 0.05 - 0.2 μm, die Bohrungsoberfläche des Flansches auf eine Rauhigkeit Ra von 0.4 - 0.8 μm bearbeitet wird und die Erwärmung des Flansches auf eine Temperatur erfolgt, die unterhalb der Wöhlertemperatur des Keramikwerkstoffs liegt und von der aus nach Zusammenfügen des Keramikteils und des Flansches beim Abkühlen auf Raumtemperatur der Eisenwerkstoff nicht über seine Streckgrenze $R_{po.2}$ beansprucht wird.

Aufgrund der erfindungsgemässen Bearbeitungsparameter des Keramik- und des Stahlteils werden Haftreibungskoeffizienten $μ_0$ von mindestens 0.5 erreicht, welche gemeinsam mit dem erfindungsgemäss festgelegten Untermass eine vorwählbare Ausreisskraft des Kolbens aus der Halterung ergibt, die über der Zugbeanspruchung im Arbeitszustand liegt.

Das geringe Untermass erfordert nur relativ tiefe Erwärmungstemperaturen. Diese liegen in der Regel unterhalb 200°C, also für die meisten Keramikwerkstoffe weit unterhalb der Thermoschockgrenze. Damit gleichmässige Spannungen im Bereich der Klemmverbindung entstehen, kann der Flansch mit einer Entlastungskerbe versehen werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in:

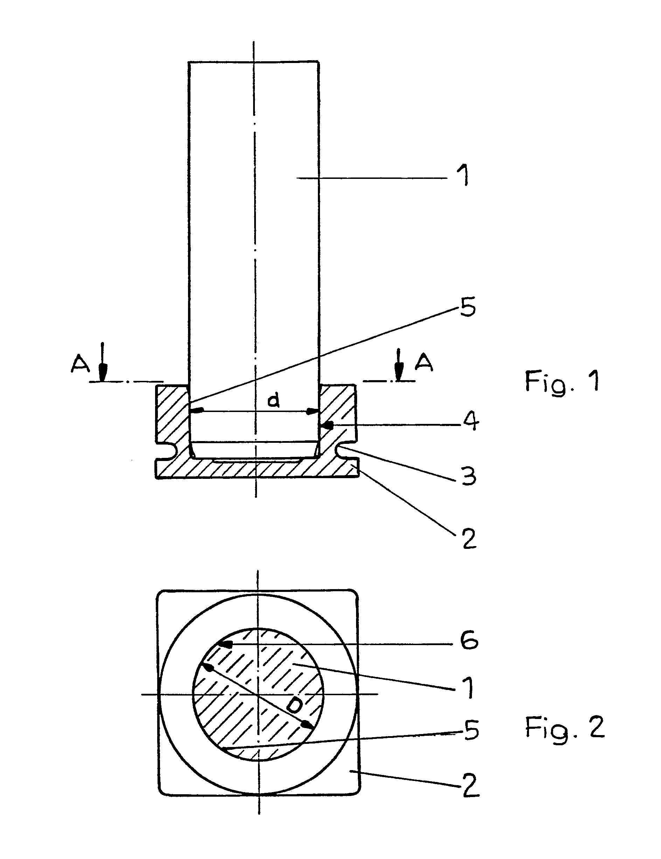

Fig. 1:   einen Querschnitt durch einen Keramik-Metallverbundkörper;

Fig. 2:   den Keramik-Metallverbundkörper aus Fig. 1 im Schnitt A-A.

Ein zylindrischer Keramikkolben 1 - z.B. im wesentlichen bestehend aus Korund - ist in einer Halterung 2 aus Stahl, die mit einer Entlastungskerbe 3 versehen ist, kraftschlüssig verbunden. Die mit der Halterung 2 in Kontakt tretende zylindrische Oberfläche 4 des Keramikkolbens 1 ist auf eine Rauhigkeit Ra von 0.1 μm bearbeitet. Zweckmässigerweise wird auch die übrige Keramikkolbenoberfläche in gleicher Weise bearbeitet. Die Zylinderführungsoberfläche bzw. die Oberfläche 6 der Bohrung 5 der Halterung 2 ist auf eine Rauhigkeit Ra von 0.8 μm bearbeitet. Vor dem Zusammenfügen der Teile 1, 2 weist die Bohrung 5 der Halterung 2 einen geringeren Durchmesser D als der Teil des Keramikkolbens 1, welcher sich nach dem Zusammenfügen in der Bohrung 5 befindet, auf. Die Differenz der beiden Durchmesser D, d, das Untermass - erfindungsgemäss zwischen 13 und 27 μm - beträgt 20 um. Selbstverständlich kann der Keramikkolben 1 ausserhalb der Bohrung 5 auch einen anderen Durchmesser aufweisen als der Teil, welcher sich in der Bohrung 5 befindet.

Eine optimale kraftschlüssige Verbindung des Keramikkolbens 1 mit einer Halterung 2 aus Stahl ergab sich bei einem Keramikkolbendurchmesser d von 21.965 - 21.970 mm und einem Durchmesser D der Bohrung 5 der Halterung 2 von 21.943 - 21.952 mm, wobei die mit der Halterung 2 in Kontakt tretende Oberfläche 4 des Keramikkolbens 1 eine Rauhigkeit Ra von 0.1 μm und die Oberfläche 6 der Bohrung 5 der Halterung 2 eine Rauhigkeit Ra von 0.8 μm aufwiesen. Die Einschrumpfung des Keramikkolbens 1 erfolgte durch Erwärmen der Halterung 2 auf eine Temperatur von 190°C. Es ergab sich ein Spiel von ca. 20 μm zwischen Keramikkolben 1 und Bohrung 5 der Halterung 2. Durch einfaches Einführen des Keramikkolbens 1 in die Bohrung 5 der Halterung 2 und nachfolgende Abkühlung wurde die kraftschlüssige Verbindung hergestellt.

An vier in gleicher Weise hergestellten Teilen wurden Messungen der Ausreisskraft in einer Prüfmaschine (Typ Amsler) durchgeführt. Dabei ergaben sich folgende Werte:

| Versuch | Unter-mass (μm) | Ausreisskraft (N/cm²) |
|---|---|---|
| 1 | 13 | 2'010 |
| 2 | 15 | 2'516 |
| 3 | 16 | 2'640 |
| 4 | 27 | 4'100 |

Aus den Ergebnissen errechnet sich ein Haftreibungskoeffizient $\mu_0$ von mindestens 0.5. Für Keramik-Stahl-Verbindungen übersteigt dieser Wert den bisher bekannten Wert von 0.1 - 0.15 erheblich. Im Gegensatz zur herkömmlichen Herstellungsweise eines derartigen Keramik-Metall-Verbundkörpers, beim dem der Flansch beispielsweise Klemmen und/oder Schrauben für die Verbindung aufweist, kann der erfindungsgemässe Verbundkörper aufgrund seiner symmetrischen Ausgestaltung auf einfache Weise hergestellt werden, was zu einer Kostenreduktion bis zu 75 % führt.

## Patentansprüche

1. Verfahren zum kraftschlüssigen Einschrumpfen eines zylindrischen Keramikteils (1) in einen Flansch (2) aus einem Eisenwerkstoff, insbesondere eines Keramikkolbens in eine mit einem Antrieb verbundene Halterung aus Stahl bei Fördereinrichtungen für flüssige und gasförmige Medien, durch teilweises Einführen des Keramikteils (1) in eine Bohrung (5) des erwärmten Flansches (2) und Abkühlen desselben auf Raumtemperatur, dadurch gekennzeichnet, dass bei Raumtemperatur der Durchmesser (D) der Bohrung (5) des Flansches (2) gegenüber dem Durchmesser (d) des formschlüssig mit dem Flansch in Kontakt tretenden Teilstücks des Keramikteils (1) ein Untermass von 13 - 27 μm aufweist, die mit dem Flansch formschlüssig in Kontakt tretende zylindrische Oberfläche (4) des Keramikteils auf eine Rauhigkeit Ra von 0.05 - 0.2 μm, die Bohrungsoberfläche (6) des Flansches auf eine Rauhigkeit Ra von 0.4 - 0.8 μm bearbeitet wird und die Erwärmung des Flansches (2) auf eine Temperatur erfolgt, die unterhalb der Wöhlertemperatur des Keramikwerkstoffs liegt und von der aus nach Zusammenfügen des Keramikteils (1) und des Flansches (2) beim Abkühlen auf Raumtemperatur der Eisenwerkstoff nicht über seine Streckgrenze $R_{p0.2}$ beansprucht wird.

2. Keramik-Metall-Verbundkörper aus einem zylindrischen Keramikteil (1) und einem Flansch (2) aus einem Eisenwerkstoff, insbesondere Keramikkolben mit einer mit einem Antrieb in Wirkverbindung zu bringender Halterung bei Fördereinrichtungen für flüssige und gasförmige Medien, dadurch gekennzeichnet, dass der Keramikteil (1) teilweise in eine Bohrung (5) des Flansches (2) eingeschrumpft ist, wobei die mit dem Flansch (2) formschlüssig in Kontakt tretende zylindrische Oberfläche (4) des Keramikteils (1) eine Rauhigkeit Ra von 0.05 - 0.2 μm, die Oberfläche (6) der Bohrung (5) des Flansches (2) eine Rauhigkeit Ra von 0.4 - 0.8 μm aufweist und die Einschrumpfung bewirkt wird durch Erwärmung des Flansches (2), dessen Durchmesser (D) der Bohrung (5) gegenüber dem Durchmesser (d) des formschlüssig mit dem Flansch (2) in Kontakt tretenden Teilstückes des Keramikteils (1) vor dem Zusammenfügen bei Raumtemperatur ein Untermass von 13 - 27 μm aufweist, auf eine Temperatur, die unterhalb der Wöhlertemperatur des Keramikwerkstoffs liegt und von der aus nach Zusammenfügen des Keramikteils (1) und des Flansches (2) beim Abkühlen auf Raumtemperatur der Eisenwerkstoff nicht über seine Streckgrenze $R_{p0.2}$ beansprucht wird.

3. Keramik-Metall-Verbundkörper nach Anspruch 2, dadurch gekennzeichnet, dass die Oberfläche (4) des Keramikteils (1) eine Rauhigkeit Ra von 0.1 μm, die Oberfläche (6) der Bohrung (5) des Flansches (2) eine Rauhigkeit von 0.8 μm aufweist.

4. Keramik-Metall-Verbundkörper nach Anspruch 3, dadurch gekennzeichnet, das das Untermass bei Raumtemperatur 20 μm beträgt.

5. Keramik-Metall-Verbundkörper nach einem der Ansprüche 2 bis 4, dadurch gekennzeichnet, dass der Flansch (2) aus Stahl besteht.

6. Keramik-Metall-Verbundkörper nach einem der Ansprüche 2 bis 5, dadurch gekennzeichnet, dass der Keramikteil (1) im wesentlichen aus Korund besteht.

7. Keramik-Metall-Verbundkörper nach einem der Ansprüche 2 bis 6, dadurch gekennzeichnet, dass der Flansch (2) mit einer Entlastungskerbe (3) versehen ist.

**Claims**

1. A process for shrink-fit locking a cylindrical ceramic component (1) into a flange (2) of ferrous material, in particular a ceramic piston in a steel holder connected to a drive in a facility for conveying fluid or gaseous media, by introducing part of the ceramic component (1) into a bore (5) in a heated flange (2) and cooling the same to temperature,
characterized in that
at room temperature, the diameter (D) of the bore (5) of the flange is, with respect to the diameter (d) of that part of the ceramic component (1) to be attached to the flange by shrink-fit locking, undersized by 13 to 27 μm, the cylindrical surface (4) of the ceramic component which is to come into contact with and so be locked into the flange is prepared such that it has a roughness Ra of 0.05 - 0.2 μm, the surface (6) of the bore hole in the flange a roughness Ra of 0.4 - 0.8 μm, and the flange (2) is heated to a temperature which is below the Wöhler temperature of the ceramic material and also such that, after fitting together the ceramic component (1) and the flange (2) and subsequently cooling the assembly to room temperature, the resulting forces are below the yield strength $R_{po.2}$ of the ferrous material.

2. A ceramic metal composite body comprising a cylindrical ceramic part (1) and a flange (2) of a ferrous material, in particular a ceramic piston with a holder for engaging with a drive mechanism to effect the purpose of the said composite body in devices for conveying fluid and gaseous media,
characterized in that
part of the ceramic component (1) is shrink-fit locked into the bore (5) of the flange (2), the cylindrical surface (4) of the ceramic component (1) to be locked into contact with the flange (2) having a roughness Ra of 0.05 -0.2 μm and the surface (6) of the bore (5) in the flange (2) a roughness Ra of 0.4 - 0.8 μm, the shrink-fit locking being achieved by heating the flange (2) before fitting it to the ceramic component (1), the diameter (D) of the bore (5) being, with respect to the diameter (d) of the part of the ceramic component (1) to be attached to the flange by shrink-fit locking, undersized by 13 - 27 μm at room temperature, said temperature of heating being below the Wöhler temperature of the ceramic material and also such that, after fitting togehter the ceramic compound (1) and the flange (2) and subsequently cooling the assembly to room temperature, the resulting forces are below the yield strength $R_{po.2}$ of the ferrous material.

3. A ceramic-metal composite body according to claim 2, characterized in that the surface (4) of the ceramic component (1) has a roughness Ra of 0.1 μm and the surface (6) of the bore (5) in the flange (2) a roughness Ra of 0.8 μm.

4. A ceramic-metal composite body according to claim 3 characterized in that the undersizing at room temperature amounts to 20 μm.

5. A ceramic-metal composite body according to one of the claims 2 to 4, characterized in that the flange (2) is of steel.

6. A ceramic-metal composite body according to one of the claims 2 to 5, characterized in that the ceramic part (1) is essentially of corundum.

7. A ceramic-metal composite body according to one of the claims 2 to 5, characterized in that the flange (2) is provided with a relief notch (3).

**Revendications**

1. Procédé pour l'ajustement par rétraction d'une partie cylindrique de céramique (1) dans un bourrelet (2) de matière ferreuse en particulier d'un piston céramique dans une fixation en acier jointe à un mécanisme de commande aux installations d'acheminement pour des milieux liquides et gazeux, en introduisant partiellement la partie de céramique (1) dans un forage (5) du bourrelet chauffé (2) et en refroidissant celui-ci jusqu'à température ambiante,
caractérisé en ce que
à température ambiante le diamètre (D) du forage (5) du bourrelet (2) présente une dimension inférieure en comparaison au diamètre (d) du tronçon de la partie céramique (1) étant ajustée au bourrelet qui est de l'ordre de 13 - 27 my et que la surface cylindrique (4) de la partie céramique étant ajustée au bourrelet est travaillée à une rugosité RA de 0.05 - 0.2 my, que la surface du forage (6) du bourrelet est travaillée à une rugosité RA de 0.4 - 0.8 my et que le bourrelet (2) est chauffé à une température qui est inférieure à la température Wöhler de la matière céramiqe et à laquelle la matière ferreuse n'est pas soumise à une extension supérieure à sa limite d'élasticité de $R_{po2}$ lors du refroidissement jusqu'à température ambiante après la jonction de la partie céramique (1) et le bourrelet (2).

2. Corps composite céramique-métal produit d'une partie cylindrique de céramique (1) et un bourrelet (2) de matière ferreuse, en particulier un piston céramique avec une fixation qui est à joindre effectivement à un mécanisme de commande aux installations d'acheminement pour des milieux liquides et gazeux, caractérisé en ce que la partie céramique (1) est partiellement ajustée par rétraction dans un forage (5) du bourrelet (2), la surface cylindrique (4) de la partie céramique (1) qui est ajustée au bourrelet (2) présentant une rugosité Ra de 0.05 - 0.2 my, et la surface (6) du forage (5) du bourrelet (2) présentant une rugosité Ra de 0.4 - 0.8 my et que la rétraction est causée par le réchauffement du bourrelet (2), dont le diamètre (D) du forage (5) présente une dimension inférieure en comparaison au diamètre (d) du tronçon de la partie céramique (1) étant ajustée au bourrelet (2) qui est de l'ordre de 13 - 27 my avant la jonction à température ambiante, à une température qui est inférieure à la température Wöhler de la matière céramique et à laquelle la matière ferreuse n'est pas soumise à une extension supérieure à sa limite d'élasticité de $R_{po2}$ lors du refroidissement jusqu'à la température ambiante après la jonction de la partie céramique (1) et le bourrelet (2).

3. Corps composite céramique-métal selon la revendication 2 caractérisé en ce que la surface (4) de la partie céramique (1) présente une rugosité Ra de 0.1 my et que la surface (6) du forage (5) du bourrelet (2) présente une rugosité de 0.8 my.

4. Corps composite céramique-métal selon la revendication 3 caractérisé en ce que à température ambiante la dimension inférieure est de 20 my.

5. Corps oomposite céramique-métal selon une des revendications 2 à 4 caractérisé en ce que le bourrelet (2) est en acier.

6. Corps composite céramique-métal selon une des revendications 2 à 5 caractérisé en ce que la partie céramique (1) consiste principalement en corindon.

7. Corps composite céramique-métal selon une des revendications 2 à 6 caractérisé en ce que le bourrelet (2) présente une rainure de décharge (3).

Fig. 1

Fig. 2